Europäisches Patentamt

European Patent Office

Office européen des brevets

(19)

(11) Veröffentlichungsnummer: **0 064 606 B2**

(12)

# NEUE EUROPÄISCHE PATENTSCHRIFT

(45) Veröffentlichungstag der neue Patentschrift:
26.07.95

(51) Int. Cl.⁶: **C04B 35/56**

(21) Anmeldenummer: **82103099.6**

(22) Anmeldetag: **10.04.82**

(30) Priorität: **28.04.81 DE 3116786**

(43) Veröffentlichungstag der Anmeldung:
**17.11.82 Patentblatt 82/46**

(45) Bekanntmachung des Hinweises auf die
Patenterteilung:
**02.01.85 Patentblatt 85/01**

(45) Bekanntmachung des Hinweises auf die
Entsheidung über den Einspruch:
**26.07.95 Patentblatt 95/30**

(84) Benannte Vertragsstaaten:
**DE FR GB SE**

(56) Entgegenhaltungen:
DE-A- 1 671 092    DE-A- 1 671 180
DE-A- 2 644 503    DE-A- 2 910 628
DE-B- 1 090 565    GB-A- 892 340
GB-A- 901 176    GB-A- 1 170 911
GB-A- 1 454 622    GB-A- 1 509 497
GB-A- 2 043 111    US-A- 2 938 807

Special Ceramics 5 (1972), Seiten 99 bis 123,
C.W. Forrest et al.

Special Ceramics 6 (1974), Seiten 183 und
184, C.W. Forrest et al.

TRG Report 2588 (S) (1974), Seiten 8 und 9,

(54) **Verfahren zur Herstellung eines homogenen Siliciumcarbid-Formkörpers.**

C.W. Forrest und P. Kennedy

(73) Patentinhaber: **Hoechst CeramTec Aktiengesellschaft
Wilhelmstrasse 14
D-95100 Selb (DE)**

(72) Erfinder: **Ricke, Werner, Dr.
Beethovenstrasse 9
D-8592 Wunsiedel (DE)**
Erfinder: **Blecha, Michael, Dr.
Hohenberger Strasse 38
D-8672 Selb/Bayern (DE)**
Erfinder: **Pohlmann, Hans-Jürgen, Dr.
Häusellohweg 64
D-8672 Selb/Bayern (DE)**

(74) Vertreter: **Hoffmann, Peter, Dipl.-Chem. et al
Hoechst AG
Patent- und Lizenzabteilung
Gebäude K 801
D-65926 Frankturt am Main (DE)**

EP 0 064 606 B2

EP 0 064 606 B2

**Beschreibung**

Die Erfindung betrifft ein Verfahren zur Herstellung eines homogenen Formkörpers aus Siliciumcarbid und Silicium, durch Reaktionssintern, wobei ausgewählte Prozentsätze von Siliciumcarbid, Kohlenstoff und Binder nach bekannten keramischen Verfahren zusammengemischt, geformt und gebrannt werden. Ein solchermaßen reaktionsgesintertes Siliciumcarbid zeichnet sich durch hohe Festigkeiten bei hohen Temperaturen, gute Thermoschockbeständigkeit und hohe Korrosionsfestigkeit aus.

Die Herstellung von Siliciumcarbid/Silizium-Verbundkörpern ist seit langem aus dem US-Patent 3 275 772 bekannt, in dem man Formkörper aus Siliciumcarbid, Graphit und temporären Bindern durch Reaktionssintern erhält. Will man bei diesem Verfahren aber Siliziumgehalte unter 30 Gew.-% realisieren, so treten erhebliche Schwierigkeiten auf. Insbesondere lassen sich die Versatzbestandteile Siliciumcarbid und Graphit nicht ohne weiteres homogenisieren, was zu Agglomeraten und Kohlenstoffanreicherungen führt. Werden letztere nur oberflächlich siliciert, so bleiben häufig Kerne mit nicht reagiertem Kohlenstoff übrig. Kommen z.B. solche Kohlenstoffreste mit Flammgasen in Berührung, so entstehen Poren, in die Sauerstoff oder andere Agenzien eindringen können, wodurch das Gefüge des Siliciumcarbids angegriffen wird und dieser Vorgang zu einer langsamen Zersetzung des Werkstoffes führt, womit eine erhebliche Festigkeitsminderung verbunden ist.

Ferner ist aus der US-PS 3 205 043 ein Verfahren bekannt, bei dem poröse SiC-Formteile einer Behandlung mit organischen Flüssigkeiten ausgesetzt werden, die anschließend verkokt und bei Temperaturen über 2000°C siliciert werden, wodurch Produkte mit verminderter Porosität erhalten werden. Dieses Verfahren ist aber für eine Serienfertigung recht umständlich und mit erheblichen Risiken behaftet, da einmal das Imprägnieren mit kohlenstoffreichen Flüssigkeiten verfahrenstechnisch sehr aufwendig ist und die gleichmäßige Verteilung des daraus gebildeten Kohlenstoffs innerhalb größerer Formkörper nicht reproduzierbar ist.

Schließlich wird ein Verfahren in der DE-OS 2 644 503 beschrieben, bei dem 60 bis 80 Gew.-% SiC-Partikel mit 40 bis 20 Gew.-% eines härtbaren C-haltigen Binders bzw. eines Gemisches aus 60 bis 75 Gew.-% SiC mit 0 bis 7 Gew.-% Graphit und 23 bis 40 Gew.-% Thermoplast-Binder im Spritzverfahren verformt werden. Außer den Verfahrensschritten Verkoken und Silicieren ist bei diesem Verfahren eine Sauerstoffbehandlung und eine Behandlung mit einem $H_2/N_2$-Gasgemisch erforderlich, um zu dem gewünschten, dichten SiC/Si-Werkstoff zu kommen. Nachteilig bei diesem Verfahren ist, daß die teilweise verkokten Plastifizierungsbestandteile sich an der Oberfläche des Körpers anreichern, so daß sie durch eine Sauerstoffbehandlung entfernt werden müssen. Diese Behandlung führt zu einer porösen Deckschicht im verkokten Zustand, die im Fertigprodukt in der Außenschale einen höheren Siliciumgehalt zur Folge hat, so daß das Werkstück als nicht homogen angesehen werden muß.

Insgesamt kann man sagen, daß die beschriebenen Maßnahmen, um einen homogenen SiC/Si-Verbundkörper zu entwickeln, noch nicht zu dem gewünschten Erfolg geführt haben, zumal sich Schwierigkeiten beim Herstellungsverfahren ergaben. So treten beim Verarbeiten von Mischungen aus Siliciumcarbid, Graphit usw. Ruß und temporären Bindern Probleme auf, die darin bestehen, daß der Graphit oder Ruß ein beträchtliches Volumen im Grünkörper einnimmt. Je kleiner die Kohlenstoffteilchen sind, desto mehr Volumen benötigen sie. Somit erreicht man in der Regel bei gleichem Preßdruck bei Verwendung von sehr feinem Kohlenstoff nur eine geringe Gründichte im Gegensatz bei gröberen Kohlenstoffteilchen. Deshalb benötigt man zur Erzielung einer gewünschten Dichte im Fertigprodukt bei sehr kleinen Kohlenstoffteilchen einen höheren Gewichtsanteil Kohlenstoff zur Bildung von sekundärem Siliciumcarbid. Setzt man als Preßhilfsmittel temporäre Binder ein, so ist die benötigte Bindermenge um so höher, je höher die spezifische Oberfläche des Kohlenstoffs ist. Zur Kompensation des dafür zusätzlichen Volumenbedarfs muß noch weiterer Kohlenstoff eingeführt werden. Die Verwendung von feinem Kohlenstoff in amorpher Form oder als Graphit hat also zur Folge, daß das Fertigprodukt einen hohen Anteil an neugebildetem Siliciumcarbid enthält. Je höher aber der Kohlenstoffgehalt im Grünkörper ist, desto höher ist die Wahrscheinlichkeit, daß einzelne Kohlenstoffpartikel nicht oder nicht vollständig mit Silicium reagieren. Die Folge sind häufig auftretende Kohlenstoffreste im Fertigprodukt. Je höher der Gehalt an freiem Kohlenstoff in der Mischung ist, desto eher besteht zudem die Gefahr, daß Kohlenstoffpartikel bei nicht vollständig homogener Verteilung der Bestandteile teilweise als Agglomerat vorliegen. So kann es im Formkörper zu lokalen Anreicherungen an freiem Kohlenstoff kommen, die auch im Endprodukt als Inhomogenitäten in Erscheinung treten und damit die Qualität des Produktes mindern. Will man diesen Nachteil dadurch umgehen, indem man grobkristallinen Kohlenstoff für die Umsetzung mit Silicium einführt, lassen sich zwar höhere Gründichten am Rohling erzielen, aber es treten Schwierigkeiten beim Silicieren auf. Entweder werden die groben Kohlenstoffpartikel unvollständig in Siliciumcarbid umgesetzt und es bildet sich eine Siliciumcarbidhaut um die Partikel, die das weitere Eindringen des Siliciums verhindert, so daß eine vollständige Umwandlung gar nicht oder nur so langsam erfolgt, daß sich besonders bei großen Formteilen eine unvertretbare lange Silicierungsdauer ergibt. Aber auch bei der vollständigen Umsetzung von groben Kohlenstoffteilchen entstehen Spannungen, die beim Herstellungsprozeß oder danach zu Rissen und Sprüngen führen. Der Grund hierfür ist in der Volumenvergrößerung um den Faktor ca. 2.2 bei der Umwandlung von Kohlenstoff in Siliciumcarbid zu sehen. Sowohl die Verwendung von über 10 Gew.-% freiem Kohlenstoff in der Ausgangsmischung als auch die Verwendung von sehr feinem oder sehr groben Kohlenstoff bringt erhebliche Nachteile, da man mit diesen Maßnahmen kein homogenes Gefüge und keinen kohlenstofffreien als auch spannungsfreien polykristallinen Formkörper auf der Basis SiC/Si erhält.

Die Aufgabe besteht somit darin, ein Verfahren zur Herstellung eines homogenen polykristallinen Formkörpers anzugeben, der aus einem Gerüstkörper von 70-92 Gew.-% Siliciumcarbid besteht und dessen Hohlräume porenfrei mit Silicium gefüllt sind und bei dem die Bearbeitung des Rohlings im Grünzustand verbessert wird. Die Aufgabe wird gelöst durch ein Verfahren zur Herstellung eines homogenen Formkörpers aus 70-92 Gew.-% Siliciumcarbid, 8-30 Gew.-% Silicium, max. 0,2 Gew.-% an freiem Kohlenstoff, einem Anteil an geschlossenen Poren von max. 0,1 Vol-% und einer Dichte von mindestens 2,90 g/cm$^3$ nach dem Reaktionssinterverfahren, bei dem ein Gemisch von 80 bis 92 Gew.-%, vorwiegend hexagonalem Siliciumcarbid mit einer Kornverteilung zwischen 1 und 100 $\mu$m, 3 bis 10 Gew.-% Kohlenstoff mit einer Kornverteilung zwischen 0,5 und 5 $\mu$m und 5 bis 15 Gew.-% eines Harzes verformt und anschließend in einer nicht-oxidierenden Atmosphäre bei erhöhter Temperatur verkokt wird, wobei der Rohling eine Dichte von 1,9 bis 2,4 g/cm$^3$ besitzt, der Anteil des freien Kohlenstoffs im verkokten Körper zwischen 5 und 15 Gew.-% beträgt und der verkokte Rohling zwischen 1420 und 1700 °C unter Vakuum zwischen 1,33 und 66.44 Pa siliciert wird. Dieses Verfahren ist dadurch gekennzeichnet, daß das umgesetzte Harze aromatisch ist und einen Verkokungsrückstand zwischen 30 und 70 Gew.-% Kohlenstoff aufweist, man die Verkokung bei 1000 °C vornimmt und der verkokte Rohling auf Endform bearbeitet wird.

Sonstige keramische Verfahrensschritte erfolgen nach dem bekannten Technologien und die Silicierung wird ebenfalls in bekannter Weise durchgeführt. Für die Ausbildung des homogenen Gefüges im Endprodukt sind auch die Teilchengrößenverteilung des in dem Versatz eingebrachten Siliciumcarbids und die Gründichte von Bedeutung. Durch passende Wahl der Kornverteilung des Siliciumcarbids in den genannten Grenzen und durch Anpassung des Preßdrucks kann das Gefüge und die Dichte des Fertigprodukts variiert und gezielt eingestellt werden. Die Verwendung von Siliciumcarbidteilchen, die größer als 100 $\mu$m sind, oder die Verdichtung zu Gründichten unter 1,90 g/cm$^3$ kann dagegen zu Inhomogenitäten führen, die festigkeitsmindernd wirken und Spannungen im silicierten Körper hervorrufen.

Weil die Bearbeitung der Formteile nach dem Pressen der Rohlinge, die bei besonders komplizierten Formen notwendig ist, erst nach dem Verkoken durchgeführt wird, werden die spanabhebenden Werkzeuge dabei nicht verschmiert. Der zu bearbeitende Körper besteht dabei zu 85 bis 95 Gew.-% aus Siliciumcarbid und zu 5 bis 15 Gew.-% aus Kohlenstoff.

Die wesentlichen Merkmale des Verfahrens der Erfindung bestehen in der Auswahl des organischen Binders unter Beachtung, daß im verkokten Zustand der Rohling einen Anteil des freien Kohlenstoffes zwischen 5 und 15 Gew.-% haben muß. Der organische Binder in Form von aromatischen Harzen erfüllt dabei im wesentlichen drei Funktionen.

Einmal umhüllt das Harz die Siliciumcarbid- und Kohlenstoffpartikel, womit die Einbindung dieser Teilchen von unterschiedlichen Korngrößen zu einer dichten und homogenen Packung erzielt wird. Ferner wirkt das Harz als Preßhilfsmittel und verleiht dem Formkörper im verkokten Zustand eine gute Bearbeitbarkeit und eine hohe Rohbruchfestigkeit. Schießlich liefert das Harz einen wesentlichen Anteil des zu sekundären Bildung von SiC erforderlichen Kohlenstoffes in einer solchen Verteilung, daß dessen Umwandlung in Siliciumcarbid vollständig und ohne Aufbau von Gefügespannungen erfolgt. Diese Harze können z.B. Novolake oder Phenolformaldehyd-Kondensationsprodukte sein, die für die Herstellung von Preßgranulat in einer organischen Flüssigkeit wie Methanol, Isopropylalkohol und Aceton gelöst werden. Diese Lösung wird dann mit den Feststoffkomponenten intensiv gemischt und anschließend getrocknet. Durch Sieben mit einer Maschenweite < 0,6 mm wird ein preßfähiges Granulat erzeugt. Bei einfachen Körpern erfolgt die Formgebung durch Trockenpressen und bei komplizierten Teilen durch spanabhebende Bearbeitung eines isostatisch gepreßten Rohlings. Das Verkoken, d.h. die Umwandlung des kohlenstoffhaltigen Binders in Kohlenstoff, geschieht unter Luftabschluß, z.B. in Argon- oder Stickstoffatmosphäre durch Erhitzen mit einer Aufheizgeschwindigkeit von 30 bis 70 °C/Std. auf 1000 °C und einer Haltezeit von ca. 5 Std.. Auch bei dickwandigen Formkörpern insbesondere Rohren mit einem Außendurchmesser von 200 mm, einen Innendurchmesser von 100 mm und einer Länge von 300 mm kann dieselbe Aufheizgeschwindigkeit gewählt werden, ohne daß es zu Rißbildungen oder Inhomogenitäten im Körper kommt. Zur Silizierung werden die nunmehr verkokten Formkörper mit beliebiger Aufheizgeschwindigkeit unter Vakuum auf eine Temperatur zwischen 1420 und 1700 °C erhitzt und in bekannter Weise siliciert. Dabei reagiert der

3

gesamte Kohlenstoff im Formkörper mit Silizium zusätzlich zu gebildetem Siliciumcarbid, wie C.W. Forrest et al., in "Special Ceramics", Nr. 5, Seite 99 (1972), bereits in dieser Literaturstellte beschrieben haben. Die verbleibenden Hohlräume werden mit flüssigem Silicium gefüllt und beim Abkühlen unter der Schmelztemperatur des Siliziums bildet sich das dichte homogene und porenfreie Gefüge aus Siliciumcarbid und Silicium.

Für besondere Verwendungszwekce kann es noch notwendig sein, daß der Formkörper durch Schleifen, Läppen und Polieren bearbeitet werden muß. Dies erfolgt in bekannter Weise mit Diamantwerkzeugen.

Mit den erfindungsgemäßen Maßnahmen, insbesondere indem man dafür Sorge trägt, daß das Ausgangsgemisch Kohlenstoff sowohl als elementaren Kohlenstoff in geeigneter Korngröße als auch in Form von verkokbarem Harz in gleichmäßiger Verteilung enthält, erzielt man einen SiC/Si-Verbundkörper mit einem homogenen Gefüge, der praktisch keine Poren und keinen freien Kohlstoff enthält.

Der besondere Vorteil des Verfahrens gegenüber den bekannten Verfahren zur Herstellung von selbstsinterndem oder rektristallisiertem Siliciumcarbid besteht darin, daß dichte Formteile nach dem Verfahren der Erfindung ohne Schwindung bei relativ niedrigen Temperaturen hergestellt werden können. Damit können auch sehr enge Maßtoleranzen am Endprodukt eingehalten werden.

Das Verfahren der Erfindung (mit Ausnahme der Bearbeitung auf Endform) wird an mehreren Beispielen erläutert.

Beispiel 1

Einen homogenen Formkörper erhält man, indem man 83 Gew.-% hexagonales Siliciumcarbid einer konventionellen Schleifmittelqualität mit einer mittleren Korngröße von 9 $\mu$m mit 8 Gew.-% Graphit von einer Korngröße von ca. 3 $\mu$m und 9 Gew.-% Phenolharz mit einem Verkokungsgrückstand von 50 % mischt, wobei das Phenolharz im Verhältnis 1 : 3 in Methanol gelöst ist. Das Lösungsmittel aus diesem zähflüssigen Brei wird durch Vakuumverdampfung entfernt und durch Sieben der getrockneten Mischung ein Granulat von 0 bis 0,6 mm hergestellt. Das Granulat wird mit 2000 bar zu einem Zylinder mit einem Durchmesser von 80 mm und einer Höhe von 10 mm gepreßt. Sein Gewicht liegt bei 98 g und die Preßdichte des Rohlings beträgt dabei 2,0 g/cm$^3$. Nach dem Verkoken bei einer Haltezeit von 5 Stunden und 1000 °C besteht der Preßling aus 13 Gew.-% reinem Kohlenstoff und 87 Gew.-% Siliciumcarbid, wobei die verbleibenden Bestandteile des Phenolharzes den Siliciumcarbidkörper zusammenhalten. Im verkokten Zustand beträgt die Dichte 1,97 g/cm$^3$. Durch Silicieren bei 1600 °C und 133 Pascal mit einer Aufheizgeschwindigkeit von 300 °C/Std. entsteht ein Formkörper von 144 g und mit einer Dichte von nunmehr 3,03 g/cm$^3$, der zu 84 Gew.-% aus Siliciumcarbid mit einer max. Korngröße von 13 $\mu$m und zu 16 Gew.-% aus Silicium besteht, das die Hohlräume zwischen den Siliciumcarbidkristallen ausfüllt.

Im Anschliff sind bei 800facher Vergrößerung keine Kohlenstoff-Reste und keine Poren zu erkennen. Die Biegefestigkeit, gemessen mit einer 4-Punkt-Auflage 40/20 mm, wurde an aus der Platte geschnittenen Prüfstäben von 4,5x3,5x50 mm zu 400 N/mm$^2$ bestimmt.

Beispiel 2 bis 8

In der gleichen Weise wurde eine Reihe von Versätzen hergestellt, die sich im Kornaufbau des Siliciumcarbids und im Verhältnis Siliciumcarbid/Kohlenstoff voneinander unterscheiden. Die Ergebnisse sind in der Tabelle 1 zusammengestellt.

Tabelle 1

| Versatzangaben in Gew.-%. | Erfindungsgemäßes Verfahren | | | | | Vergleichs-beispiele | |
|---|---|---|---|---|---|---|---|
| | 2 | 3 | 4 | 5 | 6 | 7 | 8 |
| SiC 60 μm | | | 45 | | | | |
| SiC 45 μm | | 68 | | | 38 | | 60 |
| SiC 13 μm | | | 34 | 73 | | 70 | 15 |
| SiC 9 μm | 92 | | | | 30 | | |
| SiC 3 μm | | 18 | 10 | 10 | 15 | 9 | |
| Graphit 3 μm | 3 | 4 | 3 | 7 | 5 | 11 | 15 |
| Harz | 5 | 10 | 8 | 10 | 14 | 10 | 10 |
| | 100 | 100 | 100 | 100 | 100 | 100 | 100 |
| Rohling Preßdruck (bar) | | 500 | 1500 | 2000 | 1200 | 1000 | 300 |
| % freier Kohlenstoff im verkoktem Zustand (1000° C) | 5,5 | 9,5 | 7,3 | 12,6 | 12,9 | 16,8 | 21,0 |
| Dichte verkokt g/cm³ | 1,94 | 2,10 | 2,30 | 2,15 | 1,97 | 1,84 | 1,83 |
| gesinterter Formkörper Dichte siliciert g/cm³ | 2,93 | 3,03 | 3,06 | 3,10 | 3,05 | 3,02 | 3,07 |
| % freier Kohlenstoff | | | < 0,1 | | | 0,5 | 1,6 |
| % Poren | | | < 0,1 | | | 0,1 | 0,3 |

Wie aus der Tabelle ersichtlich, sind bei den Beispielen 2 bis 6 Zusammensetzungen des Ausgangsgemisches gemäß der Erfindung verwendet worden. Die silicierten Produkte enthalten praktisch keinen freien Kohlenstoff. Die Zusammensetzungen der Vergleichsbeispiele 7 und 8, bei denen der Gehalt an freiem Kohlenstoff in den Ausgangsgemischen, höher als 10 Gew.-% und der Kohlenstoffgehalt im verkokten Zustand über 15 Gew.-% liegt, ergeben Produkte, die bei vergleichbaren Dichten deutliche Anteile von Kohlenstoff erhalten. Auch der Porenraum ist etwas größer und vor allem ist das Gefüge nicht mehr so homogen wie bei einem durch das erfindungsgemäße Verfahren hergestellten Formkörper. Dies wird anhand von Schliffbildern verdeutlicht, wobei zum besseren Vergleich zwei Zusammensetzungen mit der gleichen Korngrößenverteilung des in den Versatz eingebrachten Siliciumcarbids gegenübergestellt sind:

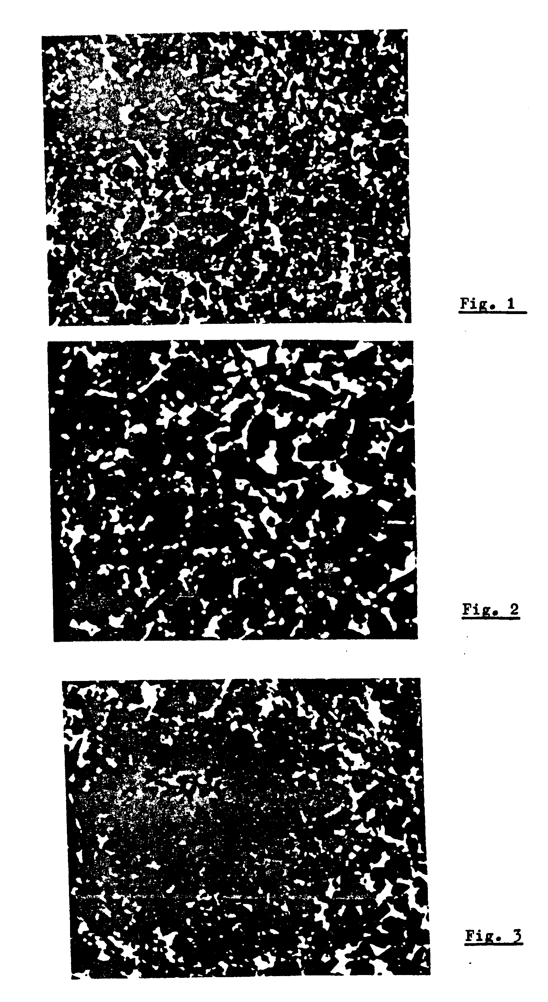

Fig. 1 zeigt das Gefüge des Werkstoffs nach Beispiel 5 im polierten Anschliff in einer Vergrößerung 1:800. In den Zwickeln zwischen den zusammengewachsenen Siliciumcarbid-Kristallen sieht man das freie Silicium. Es sind keine Graphit-Einschlüsse und keine Poren zu erkennen. Fig. 2 zeigt in der gleichen Vergrößerung das Gefüge des Werkstoffs gemäß Vergleichsbeispiel 7. Das Gefüge ist weniger homogen und zeigt deutlich Reste von Kohlenstoff, die nicht in Siliciumcarbid umgewandelt sind. Fig. 3 stellt ebenfalls in der gleichen Vergrößerung einen Ausschnitt aus dem Gefüge des Vergleichsbeispiel 7 dar, wo mit Kohlenstoff angereicherte Agglomerate sichtbar sind, bedingt durch den höheren Graphit- und Harzgehalt.

## Patentansprüche

1. Verfahren zur Herstellung eines homogenen Formkörpers aus 70-92 Gew.-% Siliciumcarbid, 8-30 Gew.-% Silicium, max. 0,2 Gew.-% an freiem Kohlenstoff, einem Anteil an geschlossenen Poren von max. 0,1 Vol.-% und einer Dichte von mindestens 2,90 g/cm³ nach dem Reaktionssinterverfahren, bei dem ein Gemisch von 80 bis 92 Gew.-%, vorwiegend hexagonalem Siliciumcarbid mit einer Kornverteilung zwischen 1 und 100 μm, 3 bis 10 Gew.-% Kohlenstoff mit einer Kornverteilung zwischen 0,5 und 5 μm und 5 bis 15 Gew.-% eines Harzes verformt und anschließend in einer nichtoxidierenden Atmosphäre bei erhöhter Temperatur verkokt wird, wobei der Rohling eine Dichte von 1,9 bis 2,4 g/cm³ besitzt, der Anteil des freien Kohlenstoffs im verkokten Körper zwischen 5 und 15 Gew.-% beträgt und der verkokte Rohling zwischen 1420 und 1700°C unter Vakuum zwischen 1,33 und 66.44 Pa siliciert wird, dadurch gekennzeichnet, daß das umgesetzte Harz aromatisch ist und einen Verkokungsrückstand zwischen 30 und 70 Gew.-% Kohlenstoff aufweist, man die Verkokung bei 1000°C vornimmt und der verkokte Rohling auf Endform bearbeitet wird.

2.  Verfahren nach Anspruch 1, dadurch gekennzeichnet, daß der Kohlenstoff als Graphit und/oder amorpher Kohlenstoff in den Masseversatz eingeführt wird.

## Claims

1.  A method of making a homogenous body of 70 - 92 % by weight of silicon carbide, 8 - 30 % by weight of silicon, not more than 0.2 % by weight of free carbon, a closed pore content of not more than 0.1 % by volume and a density of at least 2.90 g/cm³ by the reaction-sintering process, in which a mixture of 80 to 92 % by weight of predominantly hexagonal silicon carbide with a grain size distribution between 1 and 100 μm, 3 to 10 % by weight of carbon with a grain size distribution of between 0.5 and 5 μm and 5 to 15 % by weight of a resin is formed and then carbonized in a non-oxidizing atmosphere at an elevated temperature, the blank having a density from 1.9 to 2.4 g/cm³, the content of free carbon in the carbonized body being between 5 and 15 % by weight and the carbonized blank being silicized between 1420 and 1700 °C under a vacuum of between 1.33 and 66.44 Pa, characterized in that the reacted resin is aromatic and has a carbonization residue of between 30 and 70 % by weight of carbon, the carbonization is carried out at 1000 °C and the carbonized blank is machined to the final form.

2.  The method as claimed in claim 1, characterized in that the carbon is introduced as graphite and/or amorphous carbon into the charging composition.

## Revendications

1.  Procédé pour fabriquer un objet moulé homogène constitué de 70 à 92 % en poids de carbure de silicium, de 8 à 30 % en poids de silicium et d'au plus 0,2 % en poids de carbone libre et dont la proportion de pores fermés est d'au plus 0,1 % en volume et la masse volumique d'au moins 2,90 g/cm³, par le procédé de frittage réactif, selon lequel on moule un mélange de 80 à 92 % en poids de carbure de silicium, essentiellement hexagonal, ayant une granularité comprise entre 1 et 100 μm, de 3 à 10 % en poids de carbone ayant une granularité comprise entre 0,5 et 5 μm et de 5 à 15 % en poids d'une résine, puis on le cokéfie à température élevée dans une atmosphère non oxydante, l'objet moulé brut ayant une masse volumique de 1,9 à 2,4 g/cm³ et la proportion du carbone libre dans l'objet cokéfié étant comprise entre 5 et 15 % en poids, et on silicie l'objet moulé brut cokéfié à une température comprise entre 1420 et 1700°C sous un vide de 1,33 à 66,44 Pa, ce procédé étant caractérisé en ce que la résine soumise à la réaction est aromatique et a un résidu de cokéfaction compris entre 30 et 70 % en poids de carbone, en ce qu'on effectue la cokéfaction à 1000°C et en ce qu'on usine l'objet moulé brut cokéfié pour lui donner la forme finale.

2.  Procédé selon la revendication 1 caractérisé en ce que le carbone est introduit à l'état de graphite et/ou de carbone amorphe dans la compostion.

6

Fig. 1

Fig. 2

Fig. 3